# EUROPÄISCHE PATENTSCHRIFT

(11) **EP 1 415 686 B1**
(45) Veröffentlichungstag und Bekanntmachung des Hinweises auf die Patenterteilung: **20.04.2005**
(21) Anmeldenummer: 02024577.5
(22) Anmeldetag: 04.11.2002
(51) Int. Cl.: A63C 5/04, A63C 5/044, A63C 5/12, B29C 59/04

(54) **Verfahren und Vorrichtung zur Strukturierung des Laufbelages eines Schneegleitbretts, wie Ski oder Snowboard, sowie entsprechendes Schneegleitgerät**
Process and apparatus for structuring the running sole of a snow sliding board like a ski or a snowboard, and corresponding sliding apparatus
Procédé et dispositif pour structurer la semelle d'une planche de glisse sur neige, comme un ski ou un snowboard, ainsi que planche de glisse correspondante

(43) Veröffentlichungstag der Anmeldung: 06.05.2004
(73) Patentinhaber: gst Global Sports Tech. Ges.m.b.H., 4980 Antiesenhofen 95 (AT)
(72) Erfinder: Kranycan, Jürgen, Dipl.-Ing., 4980 Antiesenhofen 95 (AT)
(74) Vertreter: Popp, Eugen, Dr.

(56) Entgegenhaltungen:
- EP-A- 0 171 549
- EP-A- 0 785 000
- DE-A- 2 531 506
- DE-A- 3 006 817
- DE-A- 10 111 569
- FR-A- 2 112 645
- US-A- 5 938 878
- US-A1- 2002 149 174

## Beschreibung

Die vorliegende Erfindung betrifft ein Verfahren sowie eine Vorrichtung zur Strukturierung des Laufbelages eines Schneegleitgerätes, wie Ski, Snowboard od. dgl., wobei die Gleitfläche des Laufbelages mit eingeprägten Vertiefungen versehen ist. Des weiteren betrifft die vorliegende Erfindung ein Schneegleitgerät mit entsprechend bearbeitetem Laufbelag.

Die Ausbildung von Vertiefungen in der Gleitfläche eines Laufbelages eines Schneegleitgerätes ist allgemein bekannt, und zwar insbesondere in Verbindung mit Langlaufski, bei denen die Vertiefungen eine Schuppen- oder Dachziegelform aufweisen und als Steighilfe dienen. Auch für Alpinski wurde bereits vorgeschlagen, die Gleitfläche des Laufbelages zu strukturieren, insbesondere mit sich parallel zur Längsrichtung des Ski erstreckenden Profilrillen zu versehen, die in den Laufbelag eingefräst oder eingepresst werden. Es wird diesbezüglich u.a. auf die DE 961 335 oder DE 40 33 235 A1 verwiesen. Die Ausbildung ovaler Vertiefungen in der Gleitfläche eines Alpinski-Laufbelages ist in der AT 002 242 U1 vorgeschlagen. Ein entsprechender Vorschlag wurde jedoch bereits in der AT 338 672 B oder AT 355 467 B gemacht. Die EP 0 785 000 A1 schlägt die Ausbildung entsprechender Vertiefungen in der Gleitfläche des Laufbelages eines Snowboards vor, wobei die Vertiefungen u.a. mittels einer Prägewalze hergestellt werden sollen.

Der Zweck der vorgenannten Vertiefungen wird darin gesehen, die Gleiteigenschaft des Schneegleitgerätes zu verbessern. Vor allem sollen die Vertiefungen im Gleitbelag dazu dienen, einen Wasserfilm zwischen Ski und Schnee aufrechtzuerhalten. Bei Alpinski und Snowboards werden zu diesem Zweck die Gleitflächen der Laufbelege heutzutage geschliffen. Dabei kommt insbesondere der sog. Steinschliff zur Anwendung, welcher vom Kunden als Qualitätsstandard gefordert wird. Dieser Steinschliff besitzt jedoch nur ein relativ enges Anwendungs- und Strukturspektrum, welches einerseits in einer großtechnischen Fertigung nur schwer einzuhalten ist (kostenintensiv) und andererseits dem Verbraucher nur dann Vorteile bringt, wenn Struktur und Schneebedingungen aufeinander abgestimmt sind.

Der vorliegenden Erfindung liegt daher die Aufgabe zugrunde, ein Verfahren und eine Vorrichtung zur Strukturierung der Gleitfläche eines Laufbelages eines Schneegleitgerätes zu schaffen, durch das bzw. die man eine Gleitflächenstruktur erhält, die ohne großen Umstellungsaufwand auf die unterschiedlichsten Schneebedingungen sowie Verbraucherwünsche einstellbar ist, das bzw. die sich des weiteren sowohl für die Serienfertigung als auch für eine nachträgliche Strukturierung im Servicebereich eignen. Es sollen sich problemlos maßgeschneiderte Gleitflächenstrukturen herstellen lassen, die sich durch verbesserte Gleiteigenschaften im Vergleich zum Stand der Technik auszeichnen.

Diese Aufgabe wird verfahrenstechnisch durch Anspruch 1 und vorrichtungstechnisch durch Anspruch 1 gelöst, wobei vorteilhafte Details und Ausführungsformen sowohl des Verfahrens als auch der Vorrichtung in den jeweiligen Unteransprüchen beschrieben sind.

Ein entsprechend repariertes Schneegleitgerät, welches sich durch verbesserte Gleiteigenschaften bei unterschiedlichsten Schneebedingungen auszeichnet, ist durch Anspruch 20 ff. gekennzeichnet.

Das erfindungsgemäße Verfahren macht Gebrauch von dem an sich bekannten Prägen eines Laufbelages, wobei das Prägen dadurch gekennzeichnet ist, dass Material verschoben, d.h. nicht spanabhebend abgetragen wird, wie zum Beispiel auch beim Steinschliff. Eine solche Materialverschiebung führt jedoch zu entsprechenden Erhöhungen bzw. Materialverwerfungen aus der Gleitfläche heraus. Hier setzt nun die vorliegende Erfindung verfahrenstechnisch an, indem vorgeschlagen wird, die geprägte Gleitfläche nach der Prägung mittels Druck wieder zu glätten, d.h. die beim Prägen entstehenden Materialerhebungen bzw. Wülste in die Gleitfläche dauerhaft zurückzudrängen. Damit wird eine optimale Gleiteigenschaft des Laufbelages erzielt. Die Gleitfläche des Laufbelages ist ausschließlich durch Vertiefungen und keine gewollten oder ungewollten Erhöhungen gekennzeichnet.

Von besonderer Bedeutung ist noch die Prägung unter einer zweifach überlagerten Relativbewegung des Prägewerkzeuges gegenüber der zu prägenden Gleitfläche, da dadurch auf einfachste Weise unterschiedlich lange Vertiefungen mit ein und demselben Werkzeug erhalten werden können. Vorrichtungstechnisch wird dies dadurch erreicht, dass das Prägewerkzeug eine Prägewalze umfasst, die jeweils frei drehbar gelagerte Prägekörper aufweist. Als Prägekörper dienen vorzugsweise Kugeln. Diese Kugeln sind an der Oberfläche der Prägewalze relativ zu dieser frei drehbar. Vorzugsweise weist die Prägewalze einen über eine Tragachse geschobenen hülsenartigen Kugelkäfig auf, in dem radial nach außen vorstehende Kugeln frei drehbar gelagert sind. Dieser Kugelkäfig kann auf der Tragachse ebenfalls frei drehbar gelagert sein. Auf jeden Fall erhält man die zweifache überlagerte Relativbewegung des Prägewerkzeuges gegenüber der zu prägenden Gleitfläche durch die Drehbewegung der Prägewalze bzw. des erwähnten Kugelkäfigs zum einen und der relativ dazu frei drehbaren Prägekörper, insbesondere Kugeln, zum anderen. Durch die zweifach überlagerte Drehbewegung lässt sich durch einfachste Einwirkung entweder auf die Prägewalze oder auf den Kugelkäfig derselben eine synchrone oder mehr oder weniger asynchrone und sogar gegenläufige Bewegung der Prägekörper relativ zu der zu prägenden Gleitfläche erreichen, insbesondere wenn der Vorschub der Gleitfläche durch eine dem Schneegleitgerät zugeordnete Vorschubwalze eingestellt wird. Die erwähnte Vorschubwalze ist vorzugsweise drehangetrieben und der erwähnten Prägewalze zugeordnet, so dass das Schneegleitgerät mit seinem Laufbelag der Prägewalze zugekehrt zwischen Präge- und Vorschubwalze hindurchführbar ist. Die Prägewalze kann ebenfalls mit einem Drehantrieb koppelbar sein, so dass diese entweder synchron mit oder asynchron oder gegenläufig zu der Vorschubwalze dreht. Unabhängig vom Antrieb der Prägewalze bleibt es natürlich bei der freien Drehlagerung der Prägekörper relativ zur Prägewalze. Damit lässt sich ein "Schmieren" der Prägekörper über die zu prägende Gleitfläche vermeiden. Das Laufbelagmaterial wird also nur minimal in Vorschubrichtung bzw. in Längsrichtung des Schneegleitgerätes tangential verschoben. Durch die freie Drehlagerung der Prägekörper wird erreicht, dass die Materialverdichtung primär senkrecht zur Gleitfläche erfolgt. Dementsprechend ist es auch möglich, die Gleitfläche mit relativ einfachen Mitteln und unter relativ geringen Brücken nach der Prägung wieder zu glätten. Insbesondere besteht nicht die Gefahr, dass beim Glätten der geprägten Gleitfläche die dort ausgebildeten Vertiefungen weitgehend wieder mit Laufbelagmaterial ausgefüllt werden. Die Materialerhebungen werden also beim Glätten der Gleitfläche nicht oder nur unwesentlich in die vorher ausgebildeten Vertiefungen zurückgeschoben, da durch die erwähnte zweifach überlagerte Relativbewegung des Prägewerkzeuges gegenüber der zu prägenden Gleitfläche nur geringe Materialerhebungen um die geprägten Vertiefungen herum entstehen.

Es versteht sich von selbst, dass bei einem synchronen Antrieb von Vorschub- und Prägewalze punktförmige Vertiefungen in der Gleitfläche ausgebildet werden. Die punktförmigen Vertiefungen bedeuten bei Kugeln als Prägekörper, dass sie die Form von Kugelsegmenten mit kreisförmigem Umriß aufweisen. Bei asynchroner oder sogar gegenläufiger Bewegung von Vorschub- und Prägewalze entstehen mehr oder weniger lang-ovale Vertiefungen, wobei die Vertiefungen jeweils einen mehr oder weniger langen geradlinige Mittelabschnitt aufweisen.

Im übrigen soll darauf geachtet werden, dass die Vertiefungen in Längsrichtung des Schneegleitgerätes relativ zur Gleitfläche jeweils einen Anstellwinkel von 0,2 bis 10,0°, insbesondere etwa 4 bis 5° aufweisen. Dieser Anstellwinkel stellt eine wichtige Kenngröße dar und bestimmt den Zeitpunkt des Strömungsabrisses. Dadurch wird der sog. "Bremseffekt" der eingeprägten Vertiefungen beeinflusst. Hier sollte abhängig von der Größe des Laufbelages und dem Gewicht des Kunden eine Optimierung stattfinden, die im Servicebereich möglich ist. Im Servicebereich kann der Laufbelag; der vorzugsweise vorab glatt ausgeführt ist, abhängig vom Gewicht des Kunden geprägt werden, und zwar mehr oder weniger tief mit einem entsprechend unterschiedlichen Anstellwinkel der geprägten Vertiefungen.

Den gesamten Überlegungen liegt natürlich die Erfahrung zugrunde, dass besonders bei nassem Schnee das Gleitverhalten auffallend schlechter ist, wenn die Gleitfläche des Laufbelages durchgehend glatt ist. Dies wird mit einem sich bildenden geschlossenen Wasserfilm erklärt, welcher zu einem Bremseffekt führt. Eine Strukturierung der Gleitfläche führt zu einem Abriß des Wasserfilms und hat somit einen positiven Einfluß auf das Gleitverhalten. Dieses positive Gleitverhalten kann mit dem erfindungsgemäßen Verfahren und insbesondere auch der erfindungsgemäßen Vorrichtung optimal eingestellt werden, und zwar abhängig von äußeren Bedingungen, wie Laufflächengröße, Körpergewicht des Benutzers des Schneegleitgerätes, Art des Schneegleitgerätes und bevorzugtem Untergrund (Eispiste, Tiefschnee od. dgl.) des Benutzers bzw. Kunden.

Im übrigen können die geprägten Vertiefungen auch als Wachstaschenreserve dienen, sofern ein Wachsen des Laufbelages angebracht erscheint.

Nachstehend wird die Erfindung anhand eines zeichnerisch dargestellten Ausführungsbeispieles nochmals näher erläutert. In der Zeichnung zeigen:
- Fig. 1: einen Teil der erfindungsgemäßen Vorrichtung zum Prägen der Gleitfläche eines Laufbelages eines Schneegleitgerätes mit Prägewalze und zugeordneter Vorschubwalze in perspektivischer Ansicht;
- Fig. 2: die Einwirkung der Prägekörper auf den Laufbelag im schematischen Teilquerschnitt und vergrößerten Maßstab; und
- Fig. 3: Beispiele verschiedener Prägestrukturen, die mittels der erfindungsgemäßen Vorrichtung erzielbar sind, in perspektivischer Draufsicht.

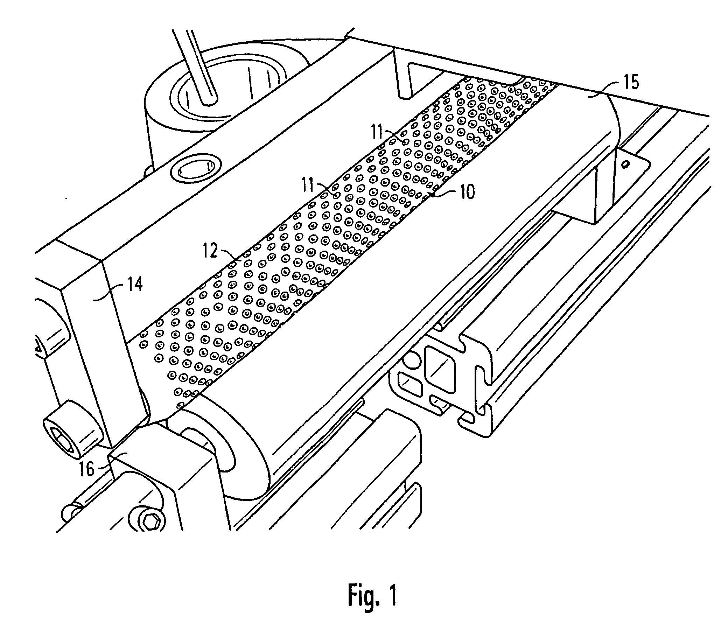

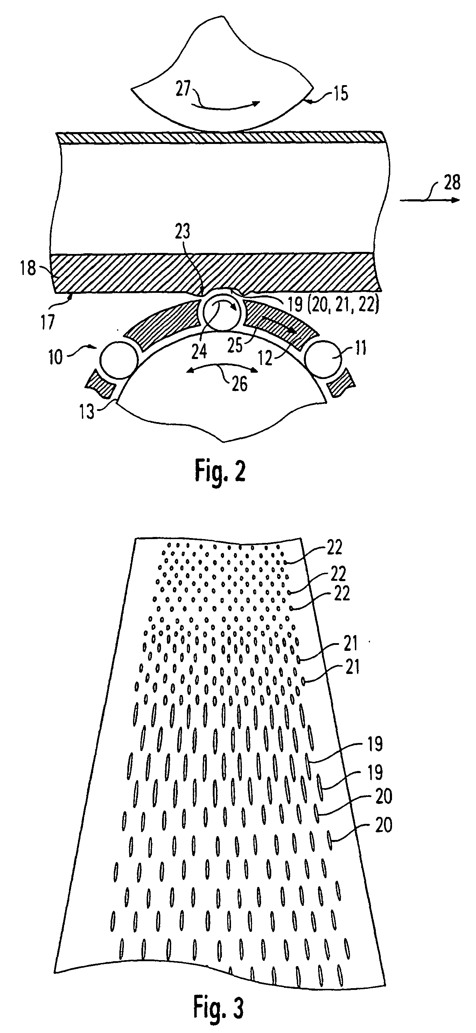

In Figur 1 ist ein Teil einer erfindungsgemäßen Vorrichtung zum Prägen der Gleitfläche eines Schneegleitgerätes, wie Ski, Snowboard od. dgl. dargestellt, wobei das Prägewerkzeug eine Prägewalze 10 mit kugelförmigen Prägekörpern 11 ist, die jeweils frei drehbar gelagert sind. Konkret sind die Prägekugeln 11 in einem hülsenartigen Kugelkäfig 12 frei drehbar gelagert gehalten (siehe Figur 2). Der Kugelkäfig 12 ist über eine Tragachse 13 geschoben. Entsprechend Figur 2 stehen die Prägekugeln 11 sowohl radial nach außen als auch radial nach innen über den Kugelkäfig 12, so dass der Kugelkäfig 12 auf der Tragachse 13 frei drehbar gelagert ist, es sei denn, der Kugelkäfig 12 wird mittels einer gesonderten Kupplung mit der Tragachse 13 gekoppelt. Die Tragachse 13 ist ebenfalls drehbar gelagert, und zwar in einem Lagerjoch 14. Vorzugsweise ist die Tragachse 13 auch mit einem Drehantrieb verbindbar, und zwar entweder mit einem gesonderten Drehantrieb oder mit einem Drehantrieb für eine der Prägewalze 10 zugeordnete Vorschubwalze 15, die in Figur 1 unterhalb der Prägewalze 10 in einem Lagerbock 16 drehbar gelagert und drehangetrieben ist. Die Vorschubwalze 15 ist vorzugsweise mit einem Reibbelag beschichtet, um ein Schneegleitgerät, zum Beispiel ein Snowboard mit dem Laufbelag der Prägewalze 10 zugewandt zwischen Prägewalze 10 und Vorschubwalze 15 im wesentlichen schlupffrei bewegen zu können. Bei dieser Bewegung wird die Prägewalze 10 durch ein vorbestimmtes Gewicht belastet, so dass abhängig von der Verformbarkeit des Laufbelagmaterials die Prägekugeln 11 mehr oder weniger tief in die Gleitfläche 17 des Laufbelages 18 (siehe Figur 2) eindringen. Im einfachsten Fall wird lediglich die Vorschubwalze 15 drehangetrieben und der Kugelkäfig 12 ist frei drehbeweglich auf der Tragachse 13 gelagert. Abhängig von der Geschwindigkeit der Vorschubwalze 15 lassen sich dann mehr oder weniger lang-ovale Vertiefungen in den Laufbelag einprägen, so wie dies in Figur 3 mit den Bezugsziffern 19, 20 und 21, wobei die Vertiefungen 19 länger ausgebildet sind als die Vertiefungen 20, und diese wieder länger als die Vertiefungen 21. Auch lassen sich nahezu punkt- bzw. kugelsegmentförmige Vertiefungen 22 im Laufbelag ausbilden, und zwar dann, wenn Vorschubwalze 15 und Prägewalze 10 bzw. Kugelkäfig 12 synchron drehen.

Wie bereits eingangs erwähnt, ist zur Ausbildung mehr oder weniger langer Vertiefungen eine asynchrone Drehbewegung von Vorschubwalze und Prägewalze erforderlich. Grundsätzlich ist es auch denkbar, die Prägewalze gegenläufig zur Vorschubwalze anzutreiben. Mit all diesen Möglichkeiten hat der Hersteller oder auch der Service die Möglichkeit, die Vertiefungen an das Schneegleitgerät einerseits und an den Benutzer desselben andererseits anzupassen. Auch die Tiefe der Vertiefungen kann durch Veränderung des Gewichts auf die Prägewalze individuell eingestellt werden.

Dem Prägewalzen/Vorschubwalzen-Paar ist noch eine hier nicht näher dargestellte Glättungswalze nachgeordnet, mittels der beim Prägen entstehende Materialerhebungen, wie sie zum Beispiel in Figur 2 mit der Bezugsziffer 23 angedeutet sind, in die Gleitfläche 17 zurückdrängbar sind. Damit lässt sich eine Gleitfläche 17 erhalten, die eine definiert glatte Oberfläche hat, in welcher lediglich Vertiefungen 19 ff. ausgebildet sind.

Durch die Tatsache, dass die Prägekugeln auf der Prägewalze 13, d.h. auch relativ zu dieser frei drehbar gelagert sind (Pfeil 24), erfolgt die Prägung der Vertiefungen 19 ff. im Wege einer zweifach überlagerten Relativbewegung der Prägekörper 11 gegenüber der zu prägenden Gleitfläche 17. Die erste Relativbewegung ist die Drehbewegung 25 des Kugelkäfigs 12 auf der Tragachse 13; die zweite Drehbewegung wird durch die freie Lagerung der Prägekugeln 11 innerhalb des Kugelkäfigs 12 erhalten (Pfeil 24).

Eine dritte Relativbewegung kann noch durch den Antrieb der Tragachse 13 in der einen oder anderen Drehrichtung überlagert werden entsprechend dem Doppelpfeil 26 in Figur 2. Die Vorschubwalze 15 dreht immer in Vorschubrichtung (Pfeil 27 in Figur 2). Damit wird das Schneegleitgerät, von dem in Figur 2 nur ein kleiner Ausschnitt dargestellt ist, in Richtung des Pfeiles 28 zwischen Prägewalze 10 und Vorschubwalze 15 transportiert.

Der Prägewalze 10 kann noch eine Heizung, insbesondere IR-Strahler vorgeordnet sein, mittels dem der Laufbelag 18 gleitflächennah erwärmt und damit geringfügig plastifiziert wird. Dadurch lassen sich die Vertiefungen 19 ff. unter Ausübung geringerer Drücke erhalten.

Abhängig vom Laufbelagmaterial kann es auch zweckmäßig sein, die Prägung selbst bei einer unter der Umgebungstemperatur liegenden Temperatur, insbesondere einer Temperatur unter 0 °C auszuführen. Zu diesem Zweck kann die Prägewalze gekühlt werden, zum Beispiel von einem Kühlmedium durchströmt werden. Die Prägung bei Minustemperaturen nach vorheriger Erwärmung des Laufflächenbelages führt zu einer regelrechten "Abschreckung" des Laufbelagmaterials beim Prägen. Das Ergebnis ist, dass mit relativ geringen Prägedrücken und bei hoher Durchlaufgeschwindigkeit hochfeste Vertiefungen erhalten werden, und zwar genauso hochfest wie bei einer schlichten Prägung bei Umgebungstemperatur, d.h. ohne Vorerwärmung und ohne Abschreckung.

Grundsätzlich ist es auch denkbar, der Prägewalze 10 eine Heizung, insbesondere IR-Strahler nachzuordnen, die bzw. der dann zwischen Prägewalze und Glättungswalze wirksam ist. Durch geringfügige Erwärmung der geprägten Gleitfläche 17 läßt sich diese dann etwas leichter glätten. Die beim Prägen entstehenden Materialerhebungen 23 werden durch die erwähnte Erwärmung etwas fließfähiger und lassen sich damit etwas leichter in die Gleitfläche 17 zurückdrängen.

Die Prägung der Gleitfläche erfolgt vorzugsweise unter einem Anpressdruck von etwa 50 bis 300 N/cm², und zwar abhängig vom Laufbelagmaterial und vorheriger Temperatureinwirkung.

Ebenfalls abhängig von den vorgenannten Parametern lassen sich Durchlaufgeschwindigkeiten von etwa 4 bis 10 m/min erzielen. Diese Durchlaufgeschwindigkeiten sind sowohl für eine Serienherstellung als auch für eine nachträgliche Prägung beim Service attraktiv.

Die Vertiefungen 19 ff. können zumindest über einen Teilbereich des Laufbelages in Längs- und Querrichtung regelmäßig oder unregelmäßig verteilt, teilweise auch überlagert, überlappend oder gruppenweise angeordnet sein.

Im übrigen weisen die Vertiefungen 19 ff. bei mehr oder weniger länglich ovaler Ausbildung in Draufsicht jeweils einen geraden, sich in Längsrichtung des Schneegleitgerätes erstreckenden Mittelabschnitt auf, der durch Bogenabschnitte vorne und hinten begrenzt ist. Des weiteren ist von Bedeutung, dass die Vertiefungen 19 ff. in Längsrichtung des Schneegleitgerätes relativ zur Gleitfläche jeweils einen Anstellwinkel von 0,2 bis 10,0° aufweisen.

Statt Kugeln 11 können als Prägekörper auch Rollen, insbesondere Tonnenwalzen oder Nadeln dienen, die Vertiefungen werden dann natürlich entsprechend breiter ausfallen als bei Prägekörpern in Form von Kugeln.

Die Vorschubwalze 15 ist mittels eines elektromotorischen Antriebs hinsichtlich der Vorschubgeschwindigkeit regelbar. Wie bereits erwähnt, kann der Kugelkäfig 12 mit der Tragachse 13 blockiert werden und mit dieser umlaufen, und zwar entweder unangetrieben oder angetrieben. Im einfachsten Fall wird die Tragachse 13 blockiert und der Kugelkäfig läuft frei um.

### Bezugszeichen

- 10: Prägewalze
- 11: Prägekörper (Kugeln)
- 12: (hülsenartiger) Kugelkäfig
- 13: Tragachse
- 14: Lagerjoch
- 15: Vorschubwalze
- 16: Lagerbock
- 17: Gleitfläche
- 18: Laufbelag
- 19: längs-ovale Vertiefung
- 20: längs-ovale Vertiefung
- 21: längs-ovale Vertiefung
- 22: kugelsegmentartige Vertiefung
- 23: Materialerhebung
- 24: Pfeil
- 25: Drehbewegung (Pfeil)
- 26: Doppelpfeil
- 27: Pfeil
- 28: Pfeil

## Patentansprüche

1. Verfahren zur Strukturierung des Laufbelages (18) eines Schneegleitgerätes, wie Ski, Snowboard od. dgl., wobei Vertiefungen (19-22) in die Gleitfläche (17) des Laufbelages (18) durch ein auf diese einwirkendes Prägewerkzeug geprägt werden, **dadurch gekennzeichnet, dass** beim Prägen auch Materialerhebungen (23) auf der gleitfläche (17) entstehen und weiter **gekennzeichnet durch** folgenden Verfahrensschritt:
- Glättung der geprägten Gleitfläche (17) mittels Druck derart, dass beim Prägen entstehende Materialerhebungen (23) in die Gleitfläche (17) dauerhaft zurückgedrängt werden.

2. Verfahren nach Anspruch 1,
**dadurch gekennzeichnet, dass**
die Gleitfläche (17) einer mehrfachen, jeweils überlagerten oder versetzt zueinander durchgeführten Prägung unterworfen wird, wobei eine Glättung nach jeder einzelnen Prägung oder nach Durchführung sämtlicher Prägungen erfolgt.

3. Verfahren nach Anspruch 1 oder 2,
**dadurch gekennzeichnet, dass**
die Prägung durch Relativbewegung zwischen Laufbelag (18) bzw. dessen Gleitfläche (17) und Prägewerkzeug durchgeführt wird.

4. Verfahren nach einem der vorhergehenden Ansprüche,
**dadurch gekennzeichnet, dass**
als Prägewerkzeug eine Prägewalze (10) verwendet wird.

5. Verfahren nach Anspruch 4,
**dadurch gekennzeichnet, dass**
die Prägung des Laufbelages (18) bzw. dessen Gleitfläche (17) im Durchlauf des Schneegleitgerätes zwischen der der zu prägenden Gleitfläche (17) zugewandten Prägewalze (10) und einer Vorschubwalze (15) erfolgt, wobei Präge- (10) und Vorschubwalze (15) entweder synchron, asynchron oder gegenläufig drehen.

6. Verfahren nach einem der Ansprüche 1 bis 5,
**dadurch gekennzeichnet, dass**
die Gleitfläche (17) unmittelbar vor der Prägung auf höhere Temperatur erwärmt wird.

7. Verfahren nach einem der Ansprüche 1 bis 6,
**dadurch gekennzeichnet, dass**
die Prägung selbst bei einer unter der Umgebungstemperatur liegenden Temperatur erfolgt.

8. Verfahren nach einem der vorhergehenden Ansprüche,
**dadurch gekennzeichnet, dass**
die Prägung bei einer Temperatur unter 0°C erfolgt.

9. Verfahren nach einem der Ansprüche 4 bis 8,
**dadurch gekennzeichnet, dass**
die Prägung unter einer durch die Drehbewegung des Prägewalze (10) zum einen und der relativ dazu frei drehbaren Prägekörper (11) zum anderen erreichten zweifach überlagerten Relativbewegung des Prägewerkzeuges bzw. der Prägekörper (11) desselben gegenüber der zu prägenden Gleitfläche (17) erfolgt.

10. Verfahren nach einem der Ansprüche 1 bis 9,
**dadurch gekennzeichnet, dass**
die Glättung der geprägten Gleitfläche (17) unter Einwirkung einer Glättungswalze erfolgt.

11. Verfahren nach einem der Ansprüche 1 bis 10,
**dadurch gekennzeichnet, dass**
die Prägung der Gleitfläche (17) unter einem Anpressdruck von etwa 50 - 300 N/cm² und einer Durchlaufgeschwindigkeit von etwa 4 - 10 m/min erfolgt.

12. Vorrichtung zur Strukturierung des Laufbelages eines Schneegleitgerätes, wie Ski, Snowboard od. dgl., mit einem auf die Gleitfläche (17) des Laufbelages (18) einwirkenden Prägewerkzeug zur Durchführung des Verfahrens nach einem der Ansprüche 1 bis 11,
**dadurch gekennzeichnet, dass**
das Prägewerkzeug eine Prägewalze (10) mit Prägekörpern (11) umfaßt, die jeweils frei drehbar gelagert sind.

13. Vorrichtung nach Anspruch 12,
**dadurch gekennzeichnet, dass**
als Prägekörper Rollen, Nadeln oder Kugeln (11) dienen.

14. Vorrichtung nach Anspruch 12 oder 13, ,
**dadurch gekennzeichnet, dass**
die Prägewalze (10) einen über eine Tragachse (13) geschobenen hülsenartigen Kugelkäfig (12) aufweist, in dem radial nach außen und ggf. auch radial nach innen vorstehende Kugeln (11) frei drehbar gelagert sind.

15. Vorrichtung nach einem der Ansprüche 12 bis 14,
**dadurch gekennzeichnet, dass**
der Prägewalze (10) eine drehangetriebene Vorschubwalze (15) zugeordnet ist, so daß das Schneegleitgerät mit seinem Laufbelag (18) der Prägewalze (10) zugekehrt zwischen Präge- und Vorschubwalze hindurchführbar ist (Pfeil 28).

16. Vorrichtung nach einem der Ansprüche 12 bis 15,
**dadurch gekennzeichnet, dass**
die Prägewalze (10) ebenfalls mit einem Drehantrieb koppelbar ist, so daß diese entweder synchron mit oder asynchron oder gegenläufig zu der Vorschubwalze (15) dreht.

17. Vorrichtung nach einem der Ansprüche 14 bis 16,
**dadurch gekennzeichnet, dass**
der Kugelkäfig (12) mit der zugeordneten Tragachse (13) koppelbar ist, und daß die Tragachse (13) entweder frei drehbar gelagert oder an einen Drehantrieb anschließbar ist.

18. Vorrichtung nach einem der Ansprüche 15 bis 17,
**dadurch gekennzeichnet, dass**
die Vorschubwalze (15) mit einem Reibbelag versehen ist.

19. Vorrichtung nach einem der Ansprüche 15 bis 18,
**dadurch gekennzeichnet, dass**
dem Präge/Vorschubwalzenpaar eine Gleitflächen-Glättungswalze nachgeordnet ist.

20. Vorrichtung nach einem der Ansprüche 12 bis 19, **dadurch gekennzeichnet, dass**
der Prägewalze (10) eine auf die Gleitfläche (17) einwirkende Heizvorrichtung vorgeordnet ist.

21. Vorrichtung nach Anspruch 19 oder 20,
**dadurch gekennzeichnet, dass**
zwischen Präge/Vorschubwalzenpaar und Glättungswalze eine weitere auf die Gleitfläche einwirkende Heizvorrichtung angeordnet ist.

22. Schneegleitgerät mit einem Laufbelag, dessen Gleitfläche (17) durch Prägung gemäß Verfahren nach einem der Ansprüche 1 bis 11 oder mit einer Vorrichtung nach einem der Ansprüche 12 bis 21 erhaltene Vertiefungen (19-22) aufweist
**dadurch gekennzeichnet, dass**
das Schneegleitgerät um die Vertiefungen (19-22) herum eine, durch das Zurückdrängen von durch die Prägung aufgeschobenem Material (23) in die Gleitflächenebene (17), entsprechende lokale Verdichtung des Materials des Laufbelages (18) aufweist.

23. Schneegleitgerät nach Anspruch 22,
**dadurch gekennzeichnet, dass**
die Vertiefungen (19-22) zumindest über einen Teilbereich des Laufbelages (18) regelmäßig oder unregelmäßig verteilt, teilweise überlagert, überlappend oder gruppenweise angeordnet sowie punktuell (22) und/oder längs-oval (19-21) ausgebildet sind.

24. Schneegleitgerät nach Anspruch 22 oder 23,
**dadurch gekennzeichnet, dass**
die Vertiefungen (19-20) bei längs-ovaler Ausbildung jeweils einen geraden, sich in Längsrichtung des Schneegleitgerätes erstreckenden Mittelabschnitt aufweisen, der nach vorne und hinten durch Bogenabschnitte begrenzt ist.

25. Schneegleitgerät nach einem der Ansprüche 22 bis 24,
**dadurch gekennzeichnet, dass**
die Vertiefungen (19 ff.) in Längsrichtung des Schneegleitgerätes relativ zur Gleitfläche jeweils einen Anstellwinkel von 0,2 bis 10,0° aufweisen.

## Claims

1. Method of structuring the running layer (18) of a device for sliding on snow, such as a ski, snowboard or the like, wherein recesses (19-22) are impressed into the sliding face (17) of the running layer (18) by an impressing tool acting thereon,
**characterised in that** raised areas of material (23) are also formed on the sliding face (17) in the impressing operation and the method further being
**characterised by** the following process step:
- smoothing of the impressed sliding face (17) by means of pressure in such a manner that raised areas of material (23) formed in the impressing operation are forced back, lastingly, into the sliding face (17).

2. Method according to claim 1,
**characterised in that**
the sliding face (17) is subject to a multiplicity of impressing operations which are overlaid or displaced in relation to one another, a smoothing operation being performed after each individual impressing operation or after carrying out all impressing operations.

3. Method according to claim 1 or 2,
**characterised in that**
the impressing operation is carried out by relative movement between the running layer (18) and its sliding face (17) and the impressing tool.

4. Method according to any one of the preceding claims,
**characterised in that**
the impressing tool used is an impressing roller (10).

5. Method according to claim 4,
**characterised in that**
the running layer (18) and its sliding face (17) is impressed during passage of the device for sliding on snow between the impressing roller (10), which faces the sliding face (17) to be impressed, and a transporting roller (15), the impressing
roller (10) and transporting roller (15) rotating synchronously, asynchronously or in opposite directions.

6. Method according to any one of claims 1 to 5,
**characterised in that**
the sliding face (17) is heated to a relatively high temperature directly prior to the impressing operation.

7. Method according to any one of claims 1 to 6,
**characterised in that**
the impressing operation itself is carried out at a temperature below the ambient temperature.

8. Method according to any one of the preceding claims,
**characterised in that**
the impressing operation is carried out at a temperature below 0°C.

9. Method according to any one of claims 4 to 8,
**characterised in that**
the impressing operation is carried out by a twofold overlaid relative movement of the impressing tool or the impressing element (11) thereof in relation to the sliding face (17) to be impressed, the relative movement being achieved by the rotational movement of the impressing roller (10), on the one hand, and of the impressing element (11) freely rotatable relative thereto, on the other hand.

10. Method according to any one of claims 1 to 9,
**characterised in that**
the smoothing of the impressed sliding face (17) is effected by the action of a smoothing roller.

11. Method according to any one of claims 1 to 10,
**characterised in that**
the impressing of the sliding face (17) is carried out with an application pressure of approximately 50-300 N/cm² and a throughput speed of approximately 4-10 m/min.

12. Apparatus for structuring the running layer of a device for sliding on snow, such as a ski, snowboard or the like, comprising an impressing tool for carrying out the method according to any one of claims 1 to 11 which acts on the sliding face (17) of the running layer (18),
**characterised in that**
the impressing tool comprises an impressing roller (10) having impressing elements (11) each of which is mounted so as to be freely rotatable.

13. Apparatus according to claim 12,
**characterised in that**
rollers, pins or balls (11) serve as the impressing elements.

14. Apparatus according to claim 12 or 13,
**characterised in that**
the impressing roller (10) has, located on a carrying axle (13), a sleeve-like ball cage (12) in which balls (11), which project radially outwards and optionally also radially inwards, are mounted so as to be freely rotatable.

15. Apparatus according to any one of claims 12 to 14,
**characterised in that**
there is associated with the impressing roller (10) a transporting roller (15) which is driven in rotation, with the result that the device for sliding on snow is transportable between impressing roller and transporting roller, with its running layer (18) facing the impressing roller (10).

16. Apparatus according to any one of claims 12 to 15,
**characterised in that**
the impressing roller (10) is likewise arranged to be coupled to a rotary drive so that it is rotated synchronously with or asynchronously or in opposite direction to the transporting roller (15).

17. Apparatus according to any one of claims 14 to 16,
**characterised in that**
the ball cage (12) is arranged to be coupled to the associated carrying axle (13) and the carrying axle (13) is either mounted so as to be freely rotatable or is connectable to a rotary drive.

18. Apparatus according to any one of claims 15 to 17,
**characterised in that**
the transporting roller (15) is provided with a friction layer.

19. Apparatus according to any one of claims 15 to 18,
**characterised in that**
arranged downstream of the impressing/transporting roller pair is a glide-face-smoothing roller.

20. Apparatus according to any one of claims 12 or 19,
**characterised in that**
arranged upstream of the impressing roller (10) is a heating device which acts on the sliding face (17).

21. Apparatus according to claim 19 or 20,
**characterised in that**
there is arranged between the impressing/transporting roller pair and the smoothing roller a further heating device which acts on the sliding face.

22. Device for sliding on snow having a running layer of which the sliding face (17) has recesses (19-22) obtained by impressing in accordance with a method according to any one of claims 1 to 11 or using an apparatus according to any one of claims 12 to 21,
**characterised in that**
the device for sliding on snow has around the recesses (19-22) a corresponding local sealing of the material of the running layer (18) effected by forcing material (23) that has been raised by the impressing operation back into the plane of the sliding face (17).

23. Device for sliding on snow according to claim 22,
**characterised in that**
the recesses (19-22) are arranged in regular or irregular distribution over at least a portion of the running layer (18), some of them overlaid, overlapping or in groups and being of punctiform (22) and/or of longitudinally-oval (19-21) formation.

24. Device for sliding on snow according to claim 22 or 23,
**characterised in that**
the recesses (19-20), when they are of longitudinally-oval formation, each have a straight middle portion that extends in the longitudinal direction of the device for sliding on snow, which portion is bounded at the front and rear by segments of an arc.

25. Device for sliding on snow according to any one of claims 22 to 24,
**characterised in that**
the recesses (19 ff.) each have an angle of incidence relative to the sliding face of from 0.2 to 10.0° in the longitudinal direction of the device for sliding on snow.

## Revendications

1. Procédé pour la structuration de la semelle (18) d'une planche de glisse sur neige telle un ski, un snowboard ou similaire, où des creux (19-22) sont matricés dans la surface de glisse (17) de la semelle (18) grâce à un outil de matriçage agissant sur celle-ci, **caractérisé en ce que** lors du matriçage, des bossages de matériau (23) sont également formés sur la surface de glisse (17), et également **caractérisé par** les étapes suivantes du procédé :
- polissage par pression de la surface de glisse (17) matricée, de manière à ce que des bossages de matériau (23) se formant lors du matriçage soient refoulés de manière durable dans la surface de glisse (17).

2. Procédé selon la revendication 1, **caractérisé en ce que** la surface de glisse (17) est soumise à plusieurs matriçages, lesquels matriçages sont effectués respectivement de manière superposée ou en décalage les uns par rapport aux autres, moyennant quoi un polissage s'en suit après chaque matriçage individuel ou après l'exécution de l'ensemble des matriçages.

3. Procédé selon les revendications 1 ou 2, **caractérisé en ce que** le matriçage est effectué grâce à un mouvement relatif entre la semelle (18) et/ou sa surface de glisse (17) et l'outil de matriçage.

4. Procédé selon l'une quelconque des revendications précédentes, **caractérisé en ce que** l'on utilise un cylindre de matriçage (10) en guise d'outil de matriçage.

5. Procédé selon la revendication 4, **caractérisé en ce que** le matriçage de la semelle (18) et/ou de sa surface de glisse (17) a lieu lors du passage de la planche de glisse sur neige entre le cylindre de matriçage (10) tourné vers la surface de glisse (17) à matricer et un cylindre d'avance (15), moyennant quoi les cylindres de matriçage (10) et d'avance (15) tournent soit de manière synchrone, asynchrone, ou antagoniste.

6. Procédé selon l'une quelconque des revendications 1 à 5, **caractérisé en ce que** la surface de glisse (17) est échauffée à une température plus élevée juste avant le matriçage.

7. Procédé selon l'une quelconque des revendications 1 à 6, **caractérisé en ce que** le matriçage s'effectue même en cas de température inférieure à la température ambiante.

8. Procédé selon l'une quelconque des revendications précédentes, **caractérisé en ce que** le matriçage s'effectue à une température inférieure à 0°C.

9. Procédé selon l'une quelconque des revendications 4 à 8, **caractérisé en ce que** le matriçage a lieu avec un mouvement relatif composé de manière double de l'outil de matriçage et/ou des éléments de matriçage (11) de celui-ci, par rapport à la surface de glisse (17) à matricer., lequel est obtenu grâce au mouvement de rotation du cylindre de matriçage (10) d'une part et des éléments de matriçage (11) pouvant tourner librement par rapport à celui-ci d'autre part.

10. Procédé selon l'une quelconque des revendications 1 à 9, **caractérisé en ce que** le polissage de la surface de glisse (17) matricée a lieu grâce à l'action d'un cylindre à polir.

11. Procédé selon l'une quelconque des revendications 1 à 10, **caractérisé en ce que** le matriçage de la surface de glisse (17) a lieu avec une pression d'application d'environ 50-300 N/cm² et une vitesse de passage d'environ 4-10 m/min.

12. Dispositif pour la structuration de la semelle d'une planche de glisse sur neige telle un ski, un snowboard ou similaire, avec un outil de matriçage agissant sur la surface de glisse (17) de la semelle (18) pour la réalisation du procédé selon l'une quelconque des revendications 1 à 11, **caractérisé en ce que** l'outil de matriçage comprend un cylindre de matriçage (10) avec des éléments de matriçage (11), lesquels sont respectivement montés de manière à pouvoir librement tourner.

13. Dispositif selon la revendication 12, **caractérisé en ce que** des cylindres, des aiguilles, ou des billes (11) servent d'élément de matriçage.

14. Dispositif selon les revendications 12 ou 13, **caractérisé en ce que** le cylindre de matriçage (10) présente une cage à billes (12) semblable à une gaine enfilée sur un axe porteur (13), dans laquelle des billes (11) dépassant radialement vers l'extérieur et le cas échéant également radialement vers l'intérieur, sont logées de manière à tourner librement.

15. Dispositif selon l'une quelconque des revendications 12 à 14, **caractérisé en ce qu'**un cylindre d'avance (15) entraîné par rotation soit associé au cylindre de matriçage (10), de sorte que l'on puisse faire passer la planche de glisse sur neige avec sa semelle (18) tournée vers le cylindre de matriçage (10) entre le cylindre de matriçage et le cylindre d'avance (flèche 28).

16. Dispositif selon l'une quelconque des revendications 12 à 15, **caractérisé en ce que** le cylindre de matriçage (10) peut également être couplé avec un entraînement tournant, de sorte que celui-ci tourne soit de manière synchrone avec le cylindre d'avance (15), ou soit de manière asynchrone ou contraire par rapport au cylindre d'avance.

17. Dispositif selon l'une quelconque des revendications 14 à 16, **caractérisé en ce que** la cage à billes (12) peut être couplée avec l'axe porteur (13) associé, et **en ce que** l'axe porteur (13) peut soit être monté de manière à tourner librement, soit être raccordé à un entraînement tournant.

18. Dispositif selon l'une quelconque des revendications 15 à 17, **caractérisé en ce que** le cylindre d'avance (15) est pourvu d'une garniture de friction.

19. Dispositif selon l'une quelconque des revendications 15 à 18, **caractérisé en ce qu'**un cylindre à polir les surfaces de glisse soit disposé en aval de la paire de cylindres de matriçage/d'avance.

20. Dispositif selon l'une quelconque des revendications 12 à 19, **caractérisé en ce qu'**en amont du cylindre de matriçage (10) est disposé un dispositif de chauffage agissant sur la surface de glisse (17).

21. Dispositif selon les revendications 19 ou 20, **caractérisé en ce qu'**entre la paire de cylindres de matriçage/d'avance et le cylindre à polir, est disposé un autre dispositif de chauffage agissant sur la surface de glisse.

22. Planche de glisse sur neige avec une semelle, dont la surface de glisse (17) présente des creux (19-22) obtenus grâce à un matriçage selon le procédé selon l'une quelconque des revendications 1 à 11 ou des creux obtenus avec un dispositif selon l'une quelconque des revendications 12 à 21, **caractérisée en ce que** la planche de glisse sur neige présente autour des creux (19-22) une densification locale correspondante du matériau de la semelle (18) en raison du refoulement du matériau (23) repoussé en raison du matriçage dans le plan de la surface de glisse (17).

23. Planche de glisse sur neige selon la revendication 22, **caractérisée en ce que** les creux (19-22) sont disposés au moins sur une zone partielle de la semelle (18) de sorte à être répartis de manière régulière ou irrégulière, de manière à se superposer en partie, de manière à se chevaucher ou par groupes, et sont par ailleurs formés de manière ponctuelle (22) et/ou de façon ovale longitudinalement (19-21).

24. Planche de glisse sur neige selon les revendications 22 ou 23, **caractérisée en ce que** les creux (19-20), en cas de réalisation de manière ovale longitudinalement, présentent respectivement une partie médiane rectiligne s'étendant en direction longitudinale de la planche de glisse sur neige, laquelle est délimitée vers l'avant et l'arrière par des parties courbes.

25. Planche de glisse sur neige selon l'une quelconque des revendications 22 à 24, **caractérisée en ce que** les creux (19 et suivants) en direction longitudinale de la planche de glisse sur neige présentent respectivement un angle d'inclinaison de 0,2 à 10,0° par rapport à la surface de glisse.
